# EUROPEAN PATENT SPECIFICATION

(11) **EP 0 477 988 B1**
(45) Date of publication and mention of the grant of the patent: **04.12.1996**
(21) Application number: 91116696.5
(22) Date of filing: 30.09.1991
(51) Int. Cl.: G11B 5/588

(54) **Rotary head for use in a magnetic recording and reproducing apparatus**
Aufzeichnungsgerät und Wiedergabegerät mit drehbaren Magnetköpfen
Appareil d'enregistrement et de reproduction avec tête rotative de type magnétique

(30) Priority: 28.09.1990 JP 260892/90; 17.06.1991 JP 144443/91
(43) Date of publication of application: 01.04.1992
(73) Proprietor: MATSUSHITA ELECTRIC INDUSTRIAL CO., LTD., Kadoma-shi, Osaka-fu, 571 (JP)
(72) Inventor: Kunihira, Tadashi, Osaka-shi, Osaka-fu (JP); Yanagawa, Yoshifumi, Yamashina-ku, Kyoto-shi, Kyoto-fu (JP)
(74) Representative: Eisenführ, Speiser & Partner

(56) References cited:
- EP-A- 0 037 715
- EP-A- 0 368 497
- GB-A- 2 067 793
- GB-A- 2 219 429

## Description

### BACKGROUND OF THE INVENTION

### Field of the Invention

The present invention relates generally to a rotary head type recording and reproducing apparatus, and more particularly to a rotary head for a magnetic recording and reproducing apparatus in which recording and reproduction are performed by the use of magnetic heads mounted on respective movable elements.

### Description of the Prior Art

Japanese Patent Laid-open Application (unexamined) No. 56-13874 discloses a magnetic reproducing apparatus in which, during a trick reproduction such as,for example, a slow-motion reproduction, quick-traverse reproduction or the like, a movable element mounted on a rotary cylinder is controlled to make a reproduction head mounted thereon trace recording tracks for reproduction of images having no noises.

In the above-described construction, it is possible to perform the position control during reproduction so that the magnetic head mounted on the movable element may trace the recording tracks based upon reproduction output levels of video signals, pilot signals or the like recorded on a magnetic tape. However, it is impossible to obtain from the magnetic tape signals required to perform the position control for the magnetic head. Accordingly, it is impossible to perform the proper positioning of the magnetic head with respect to the recording tracks, and therefore, it is difficult to correct the positional deviation of the magnetic head caused by deterioration of the movable element with age or the like. As a result, there arises a problem in that a magnetic head mounted on a movable element does not effectively function during the recording which requires the highly accurate positioning for the magnetic head to adapt it to a recording format.

EP-A-0 368497 discloses a rotary head for a magnetic recording and reproducing apparatus comprising a fixed cylinder, a rotary cylinder opposed to the fixed cylinder, two electrically controllable movable elements mounted on the rotary cylinder so as to be 180° apart from each other and at least two magnetic heads secured to said movable elements, respectively.

EP-A-0 037 715 discloses a head positioning transducer for helical scan video reproducer with a mounting surface of LED provided on a rotary cylinder and position detector means provided on the rotary cylinder for use with the rotating drum assembly for scanning a magnetic tape along a plurality of adjacent helically positioned record tracks, wherein the transducer includes a permanent magnet field assembly and a drive coil positioned adjacent thereto mounted on a a cantilevered beam, at one end of which a playback head is mounted, such that a drive current supplied to the coil produces a field which interacts with the field of the magnet, causing a force on the coil and beam, resulting in controlled movement of the head transverse to the record tracks.

GB 2 219 429 discloses a rotary drum head assembly, allowing lateral shifting for tracking purposes, including a yoke assembly cooperating with permanent magnets and an intervening pole piece to establish magnetic flux paths intersecting a coil wound on a bobbin supported by at least on leaf spring having an elongation on which the head is mounted. The whole assembly is fixed within the head drum and is electrically connected to the required circuitry by a rotary transformer within the drum.

### SUMMARY OF THE INVENTION

The present invention has been developed to overcome the above-described disadvantage.

It is accordingly an object of the present invention to provide an improved rotary head capable of performing recording and reproduction by the use of magnetic heads mounted on respective movable elements.

In accomplishing this and other objects, a rotary head according to the present invention includes a fixed cylinder, a rotary cylinder opposed to the fixed cylinder, two electrically controllable movable elements mounted on the rotary cylinder so as to be 180° apart from each other, at least two magnetic heads secured to the movable elements, respectively, and at least one reference surface provided on the rotary cylinder. The rotary head further includes position detector means for detecting the position of the movable elements and that of the reference surface and control means for controlling the movable elements in response to an output from the position detector means so that the magnetic heads may be located appropriately with respect to the reference surface.

In the above-described construction, the positional deviation of the magnetic heads caused by the movable elements is corrected by the use of the reference surface and the position detector means so that signals may be appropriately recorded on a recording medium.

### BRIEF DESCRIPTION OF THE DRAWINGS

This and other objects and features of the present invention will become more apparent from the following description taken in conjunction with the preferred embodiment thereof with reference to the accompanying drawings, throughout which like parts are designated by like reference numerals, and wherein:
Fig. 1 is a sectional view of a rotary head according to a first embodiment of the present invention;
Fig. 2 is a top plan view of the rotary head of Fig. 1;
Fig. 3 is a block diagram of a control system for controlling the rotary head of Fig. 1;
Fig. 4 is a time chart indicative of the operation of the rotary head of Fig. 1;
Fig. 5 is a view similar to Fig. 2, according to a second embodiment of the present invention;
Fig. 6 is a time chart indicative of the operation of the rotary head of Fig. 5;
Fig. 7 is a view similar to Fig. 1, according to a third embodiment of the present invention;
Fig. 8 is a view similar to Fig. Fig. 2, according to the third embodiment of the present invention; and
Fig. 9 is a view similar to Fig. 1, according to a fourth embodiment of the present invention.

### DETAILED DESCRIPTION OF THE PREFERRED EMBODIMENTS

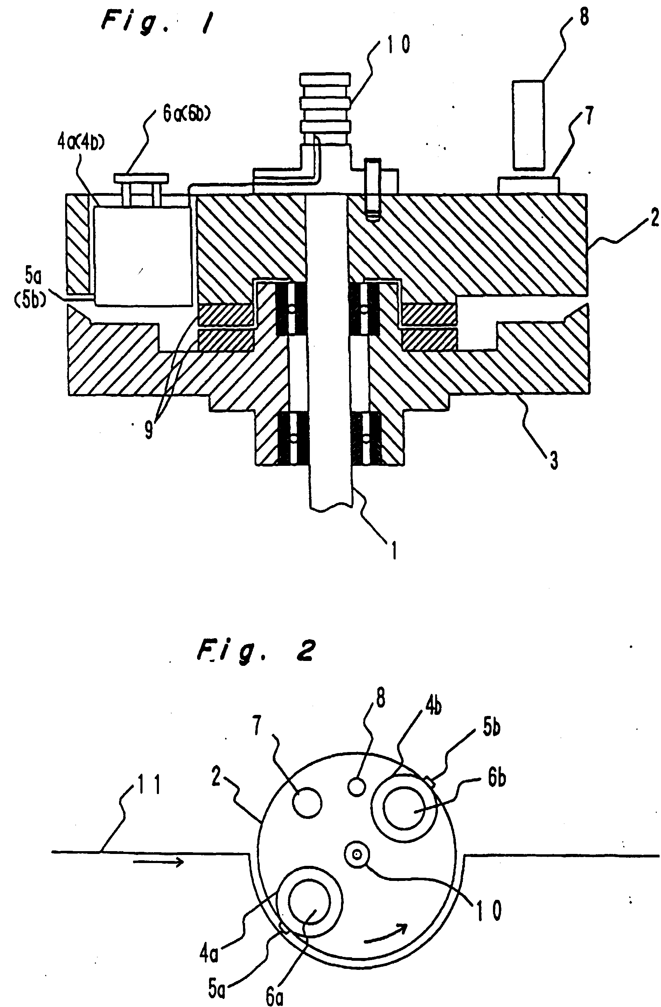

Referring now to the drawings, there is shown in Figs. 1 and 2 a rotary head for use in a magnetic recording and reproducing apparatus according to a first embodiment of the present invention.

The rotary head comprises a rotary shaft 1, a rotary cylinder 2 secured to the rotary shaft 1, a fixed cylinder 3 opposed to the rotary cylinder 2, and two movable elements 4a and 4b accommodated in respective recesses formed in the rotary cylinder 2 so as to be about 180° apart form each other. Each of the movable elements 4a and 4b shown in the figures is a moving coil type actuator. The rotary head also comprises two magnetic heads 5a and 5b secured to respective movable elements 4a and 4b and two detection objects 6a and 6b mounted on the movable elements 4a and 4b, respectively, so as to be movable in association with the movement of respective magnetic heads 5a and 5b. The rotary head has a reference surface 7 provided on the rotary cylinder 2. A position detector element 8 of the eddy current type for detecting the position of the detection objects 6a and 6b and that of the reference surface 7 is disposed above the rotary head 2 and is fixed by a support member (not shown) mounted on a frame of the magnetic recording and reproducing apparatus. The rotary head further comprises a rotary transformer 9 and a slip ring 10 for supplying electric power to the movable elements 4a and 4b.

As shown in Fig. 2, a magnetic tape 11 is brought into contact with and travels along the periphery of the rotary cylinder 2 and that of the fixed cylinder 3. The magnetic heads 5a and 5b have different azimuth angles for recording signals on the magnetic tape 11.

The position detector element 8 is located on the side opposite to the magnetic tape 11. The reason for this is that the magnetic heads 5a and 5b do not undergo much influence from magnetism of the position detector element 8 during recording or reproduction.

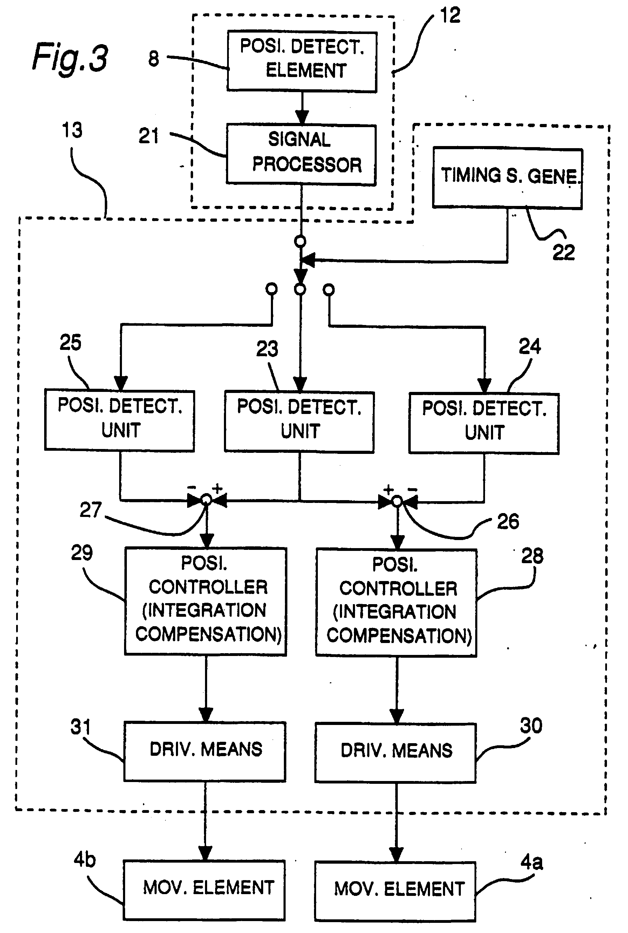

Fig. 3 is a block diagram indicative of a position detector means 12 and a control means 13. The position detector means 12 comprises a position detector element 8 and a signal processor 21. A signal detected by the position detector element 8 is inputted into a signal processor 21 and is outputted therefrom as a position detector signal. The signal processor 21 performs processings, for example amplification and/or straight line correction, with respect to the signal outputted from the position detector element 8.

A signal outputted from the position detector means 12 is selectively inputted into any one of three position detector units 23, 24, and 25 for the reference surface 7 and the detection objects 6a and 6b, respectively. The connection between an output terminal of the position detector means 12 and input terminals of the position detector units 23, 24, and 25 is switched by a timing signal generator 22. When the reference surface 7 passes below the position detector element 8, the position detector unit 23 for the reference surface 7 is selected and memorizes the position detector signal at that time as a reference position. Likewise, when the detection objects 6a and 6b pass below the position detector element 8, the position detector units 24 and 25 are selected by turns and memorize respective position detector signals. An output of the position detector unit 23 for the reference surface 7 is inputted into two subtracters 26 and 27 by which outputs of the position detector units 24 and 25 for the detection objects 6a and 6b are subtracted therefrom for calculation of respective positional errors, which are in turn inputted into respective position controllers 28 and 29.

Based upon positional error signals, the position controllers 28 and 29 generate respective control signals and drive the movable elements 4a and 4b with the use of drive means 30 and 31 to control the position of the magnetic heads 5a and 5b, respectively.

As is clear from the above, the control means 13 comprises the timing signal generator 22, the position detector unit 23 for the reference surface 7, the position detector units 24 and 25 for the detection objects 6a and 6b, the position controllers 28 and 29, and the drive means 30 and 31.

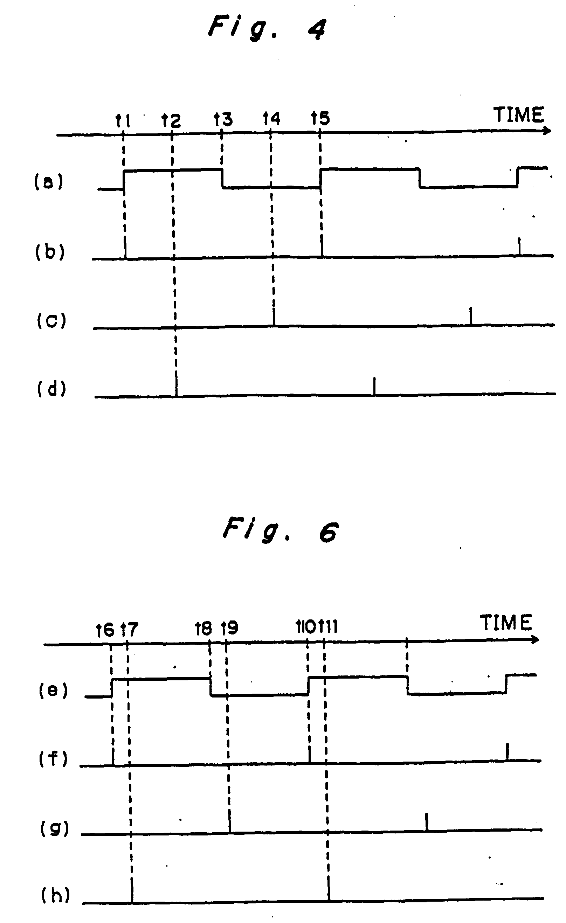

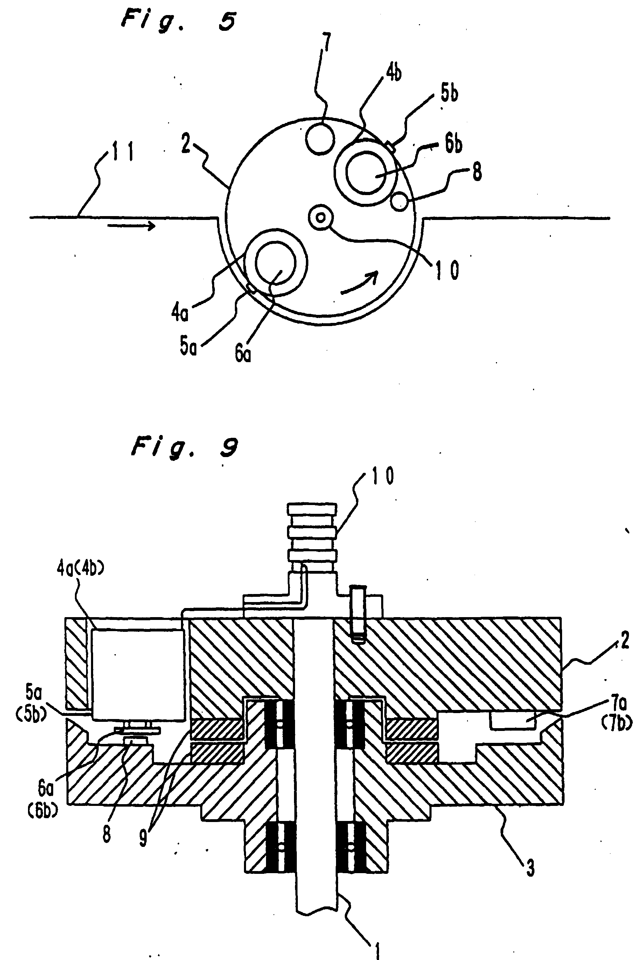

Fig. 4 is a time chart indicative of the timing for detecting the position of the reference surface 7 and that of the detection objects 6a and 6b by the use of the position detector element 8.

The waveform of a signal (a) is used for switching the magnetic heads 5a and 5b. The waveform of a signal (b) indicates sampling points for detecting the position of the reference surface 7. The waveform of a signal (c) indicates sampling points for detecting the position of the detection object 6a whereas that of a signal (d) indicates sampling points for detecting the position of the detection object 6b.

The rotary head having the above-described construction operates as follows.

In Fig. 2, since the rotary cylinder 2 rotates counterclockwise, the reference surface 7 and the detection objects 6b and 6a pass in this order below the position detector element 8 fixed to a frame by a support member. When the reference surface 7 has passed below the position detector element 8, the position detector element 8 detects the position of the reference surface 7. Then, the signal processor 21 processes an output from the position detector element 8 and outputs a position detector signal.

As shown in Fig. 4, since the timing signal generator 22 can recognize the position detector signal at a time t1 as being a position detector signal for the reference surface 8 based upon the time elapsed after the receipt of a head switching signal, an output of the signal processor 21 is inputted into the position detector unit 23 for the reference surface 7. Likewise, upon rotation of the rotary cylinder 2, when the detection objects 6a and 6b have passed below the position detector element 8, i.e., at times t4 and t2 shown in Fig. 4, the position detection for the detection objects 6a and 6b is performed, and outputs of the signal processor 21 are inputted into the position detector units 24 and 25, respectively.

Detection values stored in the position detector units 24 and 25 are subtracted from a detection value stored in the position detector 23 by the subtracters 26 and 27, respectively, and subtraction results are inputted as positional error signals into the position controllers 28 and 29.

The position controllers 28 and 29 generate respective control signals required to control the movable elements 4a and 4b using the drive means 30 and 31, respectively, so that the detection objects 6a and 6b, i.e., the magnetic heads 5a and 5b may properly position with respect to the reference surface 7.

It is to be noted here that the position controllers 28 and 29 are required to perform only the home position control and have respective integration compensating elements or characteristics to achieve highly accurate positioning without any offset.

Preferably, the position control operation for the magnetic heads 5a and 5b terminates until signal recording is initiated with respect to the magnetic tape 11. More specifically, after the position of the reference surface 7 is detected at a time t1 and that of the detection object 6a is detected at a time t4, the position control operation is required to terminate by a time t5 from which subsequent recording is initiated by the magnetic head 5a. In this case, correction in the position of the magnetic head 5a by the positional signals sampled at the times t1 and t4 completes by the subsequent recording.

Similarly, with respect to the position detection for the reference surface 7 to be performed at the time t1 and that for the detection object 6b to be performed at the time t2, the position control operation terminates by a time t3 from which subsequent recording is initiated by the magnetic head 5b. In this case, correction in the position of the magnetic head 5b by the positional signals sampled at the times tl and t2 completes by the subsequent recording.

In other words, after the position of the magnetic heads 5a and 5b have been detected, the position control operation is terminated within a period equal to a quarter of a head switching period so that the correction in the position of the magnetic heads 5a and 5b may be performed before the signal recording is initiated with respect to the magnetic tape 11.

Based upon the position detector signals of the reference surface 7 and the detection objects 6a and 6b, the position control is performed so that the magnetic heads 5a and 5b may be properly positioned relative to the reference surface 7. To this end, it is necessary to adjust the positional deviation between the reference surface 7 and the detection objects 6a and 6b in advance. This adjustment can be performed in a manner as similar to that for a fixed magnetic head. Although a spacer is generally used in the height adjustment for the fixed magnetic head, it is only necessary, in the height adjustment for a magnetic head mounted on a movable element, to store in the control means 13 a positional error signal or driving signal for moving the magnetic head by a certain length required for the adjustment. It is, therefore, very easy to electrically perform the height adjustment for the magnetic heads 5a and 5b.

As shown in the block diagram of Fig. 3, the position detector means 12 consists of a single position detector element 8 and a single signal processor 21. Accordingly, it is possible to perform the position detection with accuracy without causing any dispersion in the position detector element 8 and the signal processor 21.

As described above, according to the present invention, since the difference between the position of reference surface 7 and that of the detection objects 6a and 6b is always detected, the position detection for the magnetic heads 5a and 5b can be performed with high accuracy under little influence of drift of the position detector means 12.

Fig. 5 depicts a rotary head according to a second embodiment of the present invention, in which the position detector element 8 fixed by a support member carried by a frame is disposed in the proximity of the location (hereinafter referred to as a separation point) where the magnetic tape 11 in contact with the rotary cylinder 2 and the fixed cylinder 3 leaves them. Furthermore, in the first embodiment, the reference surface 7 is located the same distance apart from both the movable elements 4a and 4b whereas, in the second embodiment, the reference surface 7 is located closer to the movable element 4b to which the magnetic head 5b is secured than to the movable element 4a.

Fig. 6 is a time chart indicative of the timing for detecting the position of the reference surface 7 and that of the detection objects 6a and 6b by the use of the position detector element 8.

As similar to the time chart of Fig. 4, the waveform of a signal (e) is used for switching the magnetic heads 5a and 5b. The waveform of a signal (f) indicates sampling points for detecting the position of the reference surface 7. The waveform of a signal (g) indicates sampling points for detecting the position of the detection object 6a whereas that of a signal (h) indicates sampling points for detecting the position of the detection object 6b.

Comparing the time chart of Fig. 6 with that of Fig. 4, it can be known that the timing for detecting the position of the detection objects 6a and 6b mounted on the movable elements 4a and 4b is required to be made earlier in the former than in the latter. The reason for this is that the sampling of position detector signals must be performed earlier by a period of time corresponding to a length of shift of the position detector element 8 from the central portion on the side opposite to the magnetic tape 11 towards the separation point of the magnetic tape 11. Accordingly, times t9 and t7 in the time chart of Fig. 6 are ahead of times t4 and t2 in that of Fig. 4. For example, when the position detector element 8 is disposed 30° apart from the separation point of the magnetic tape 11, it is necessary to perform the sampling 60° earlier than the position of Fig. 4, and therefore, the sampling is advanced by one-sixth of a head switching period.

On the other hand, it is necessary to shift the timing for detecting the position of the reference surface 7 by a period of time corresponding to the sum of a length of shift of the reference surface 7 towards the movable element 4b and a length of shift of the position detector element 8 towards the separation point of the magnetic tape 11. For example, when the position detector element 8 is disposed 30° apart from the separation point of the magnetic tape 11 and the reference surface 7 is disposed 30° apart from the movable element 4b, it is necessary to advance the sampling 60° due to the shift of the position detector element 8 and to delay it 60° due to the shift of the reference surface 7. As a result, since the deviation in the sampling time becomes 0° in total, the timing for sampling the reference surface 7 becomes that indicated in Fig. 4.

By making the position detector element 8 be positioned close to the magnetic tape 11, the period of time within which the position control is performed and should be settled can be prolonged. When the position of the reference surface 7 is detected at a time t6, such a period can be prolonged by one-sixth of a head switching period as compared with the first embodiment, for example, from t9 to t10 in the case of the movable element 4a and from t7 to t8 in the case of the movable element 4b. Furthermore, by making the location of the reference surface 7 close to the movable element 4a, the detection value in the position of the reference surface 7 can be immediately used for the position control of the movable element 4b, thereby enabling the correct control without much time lag.

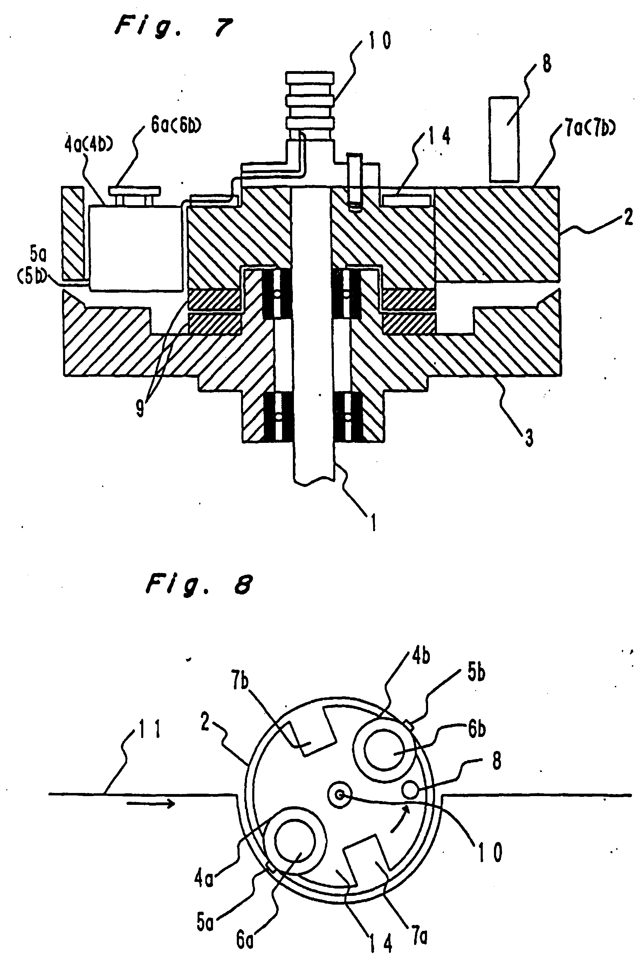

Fig. 7 depicts a rotary head according to a third embodiment of the present invention.

The rotary head of Fig. 7 is substantially the same in construction as that of Fig. 1 except that, in the former, part of the upper surface of the rotary cylinder 2 is used as reference surfaces 7a and 7b and a wiring board 14 is accommodated in a recess formed at the upper surface of the rotary cylinder 2 except the reference surface 7.

As shown in Fig. 8, the two reference surfaces 7a and 7b are in symmetric relationship with respect to the rotary shaft 1, and also, the recess accommodating the wiring board 14 is symmetrically formed with respect to the rotary shaft 1.

The operation of the rotary head according to this embodiment is substantially the same as that of the rotary head according to the first embodiment. In this embodiment, however, only one of the two reference surfaces 7a and 7b is used as the reference position and the other one of the reference surfaces 7a and 7b is not used in the position detector means 12 and the control means 13.

The integral formation of the reference surfaces 7a and 7b with the rotary cylinder 2 can enhance the accuracy of the reference surfaces 7a and 7b and reduce the number of parts.

Furthermore, since the wiring board 14 is accommodated in the recess formed at the upper surface of the rotary cylinder 2, the wiring between the movable elements 4a and 4b and the slip ring 10 can be performed at a location lower than the reference surfaces 7a and 7b, thereby making it possible to prevent wires from twining around or being caught by the position detector element 8.

The symmetric arrangement of the reference surfaces 7a and 7b with respect to the rotary shaft 1 can improve the balance of the rotary cylinder 2 and thus contributes to smooth rotation of the rotary cylinder 2. However, the number of the reference surfaces is not limited by two but may be any number more than two on condition that the balance of the rotary cylinder would be maintained.

In addition, since both the reference surfaces 7a and 7b are not used as the reference position to be detected by the position detector element 8, the position detection can be performed without taking account of positional deviation between the reference surfaces 7a and 7b due to periodical whirling or poor machining of the rotary cylinder 2.

Fig. 9 depicts a rotary head according to a fourth embodiment of the present invention.

The rotary head of Fig. 9 is substantially the same in construction as that of Fig. 1 except that, in the former, the reference surfaces 7a and 7b are provided on the lower surface of the rotary cylinder 2 and the detection objects 6a and 6b mounted on respective movable elements 4a and 4b are opposed to the fixed cylinder 3 to which the position detector element 8 is secured.

The relationship in the arrangement of the reference surfaces 7a and 7b, the movable elements 4a and 4b, and the position detector element 8 on the cylinders 2 and 3 may be the same as that of the first or second embodiment.

In this embodiment, since the position detector element 8 is secured to and accommodated in the fixed cylinder 3, it is not necessary to fix the position detector element 8 by the use of a support member carried by a frame, thereby facilitating the handling of the cylinders 2 and 3. Moreover, since the detection objects 6a and 6b are mounted on the rotary cylinder 2 so as to confront the fixed cylinder 3, the operator cannot directly touch the detection objects 6a and 6b and the position detector element 8. Accordingly, there is no possibility of operating points shifting after adjustment.

It is to be noted here that although the eddy current type position detector element is employed in the above-described embodiments, any other position detector element of the electrostatic capacity type or optical type may also be employed.

It is also to be noted that the timing signal generator is merely required to generate signals capable of delaying head switching signals and can be composed of three monostable multivibrators. Alternatively, the timing signal generator may comprise a timer if a microcomputer is employed.

## Claims

1. A rotary head for use in a magnetic recording and reproducing apparatus comprising:
a fixed cylinder (3);
a rotary cylinder (2) opposed to said fixed cylinder;
two electrically controllable movable elements (4a, 4b) mounted on said rotary cylinder so as to be about 180° apart from each other;
at least two magnetic heads (5a, 5b) respectively secured to said two movable elements (4a, 4b); and
a control means (13) for controlling said movable elements (4a, 4b);
characterized by
at least one reference surface (7, 7a, 7b) provided on said rotary cylinder (2); and
vertical position detector means (12, 8), spaced apart from said rotary cylinder (2), for detecting vertical positions of said movable elements (4a, 4b) and a vertical position of said reference surface (7, 7a, 7b) once for each rotation of said rotary cylinder (2);
wherein said control means (13) controls said movable elements (4a, 4b) in response to an output from said vertical position detector means (12) so that said magnetic heads (5a, 5b) are located at a predetermined vertical position with respect to the vertical position of said reference surface (7, 7a, 7b).

2. The rotary head according to claim 1,
wherein said magnetic heads (5a, 5b) have different azimuth angles.

3. The rotary head according to claim 1,
wherein said control means (13) includes an integration compensating means (28,29) when signals are recorded on a magnetic tape (11).

4. The rotary head according to claim 1,
wherein said vertical position detector means (12) comprises a single vertical position detector element (8) and a single signal processor (21).

5. The rotary head according to claim 4,
wherein said vertical position detector element (8) is located on a side opposite to the side on which a magnetic tape (11) is brought into contact with said fixed and rotary cylinders (3,2).

6. The rotary head according to claim 5,
wherein said vertical position detector element (8) is disposed close to a location where the magnetic tape (11) leaves said cylinders (2,3).

7. The rotary head according to claim 1,
wherein said reference surface (7, 7a, 7b) is provided upstream from a center line between said movable elements (4a, 4b) in a direction of rotation of said rotary cylinder (2).

8. The rotary head according to claim 1,
wherein said reference surface (7, 7a, 7b) is integrally formed with said rotary cylinder (2).

9. The rotary head according to claim 1,
wherein said rotary cylinder (2) has a plurality of reference surfaces (7a, 7b)

10. The rotary head according to claim 9,
wherein only one of the plurality of reference surfaces (7a, 7b) is used as a reference point detected by said vertical position detector means (12).

11. The rotary head according to claim 1,
wherein said vertical position detector means (12) comprises a vertical position detector element (8) opposed to the upper surface of said rotary cylinder (2) and wherein part of the upper surface of said rotary cylinder (2) is used as said reference surface.

12. The rotary head according to claim 11,
further comprising a wiring board (14) accommodated in a recess formed at an upper portion of said rotary cylinder.

13. The rotary head according to claim 1,
wherein said vertical position detector means (12) comprises a vertical position detector element (8) mounted on said fixed cylinder (3) and wherein part of that surface of said rotary cylinder (2) that confronts said fixed cylinder (2) is used as said reference surface.

## Patentansprüche

1. Drehkopf für ein magnetisches Aufzeichnungs- und Wiedergabegerät, enthaltend:
einen stehenden Zylinder (3),
einen sich drehenden Zylinder (2), der gegenüber dem stehenden Zylinder vorgesehen ist,
zwei elektrisch steuerbare, bewegbare Elemente (4a, 4b), die an dem sich drehenden Zylinder so angebracht sind, daß sie in einem Winkel von ca. 180° zueinander beabstandet angeordnet sind,
zumindest zwei Magnetköpfe (5a, 5b), die jeweils an den beiden bewegbaren Elementen (4a, 4b) angebracht sind, und
ein Steuermittel (13) zum Steuern der bewegbaren Elemente (4a, 4b),
gekennzeichnet durch
zumindest eine Referenzoberfläche (7, 7a, 7b), die an dem sich drehenden Zylinder (2) vorgesehen ist, und von dem sich drehenden Zylinder (2) beabstandet angeordnete Vertikalpositionserfassungsmittel (12, 8) zum Erfassen der vertikalen Positionen der bewegbaren Elemente (4a, 4b) sowie der vertikalen Position der Referenzoberfläche (7, 7a, 7b) bei jeder Drehung des sich drehenden Zylinders (2),
wobei das Steuermittel (13) die bewegbaren Elemente (4a, 4b) in Erwiderung einer Ausgabe aus den Vertikalpositionserfassungsmitteln (12) so steuert, daß die Magnetköpfe (5a, 5b) in einer vorbestimmten vertikalen Position, bezogen auf die vertikale Position der Referenzoberfläche (7, 7a, 7b), angeordnet sind.

2. Drehkopf nach Anspruch 1,
bei dem die Magnetköpfe (5a, 5b) unterschiedliche Azimutwinkel aufweisen.

3. Drehkopf nach Anspruch 1,
bei dem das Steuermittel (13) ein Integrationskompensationsmittel (28, 29) aufweist, wenn Signale auf einem Magnetband (11) aufgezeichnet werden.

4. Drehkopf nach Anspruch 1,
bei dem das Vertikalpositionserfassungsmittel (1 2) ein einzelnes Vertikalpositionserfassungselement (8) und einen einzelnen Signalprozessor (21) enthält.

5. Drehkopf nach Anspruch 4,
bei dem das Vertikalpositionserfassungselement (8) auf einer Seite angeordnet ist, die der Seite gegenüberliegt, an der ein Magnetband (11) in Kontakt mit dem stehenden und mit dem sich drehenden Zylinder (3, 2) gebracht wird.

6. Drehkopf nach Anspruch 5,
bei dem das Vertikalpositionserfassungselement (8) dicht an einem Ort angeordnet ist, an dem das Magnetband (11) die Zylinder (2, 3) verläßt.

7. Drehkopf nach Anspruch 1,
bei dem die Referenzoberfläche (7, 7a, 7b) stromaufwärts einer Mittenlinie zwischen den bewegbaren Elementen (4a, 4b) in eine Drehrichtung des sich drehenden Zylinders (2) vorgesehen ist.

8. Drehkopf nach Anspruch 1,
bei dem die Referenzoberfläche (7, 7a, 7b) als Einheit mit dem sich drehenden Zylinder (2) ausgebildet ist.

9. Drehkopf nach Anspruch 1,
bei dem der sich drehende Zylinder (2) mehrere Referenzoberflächen (7a, 7b) aufweist.

10. Drehkopf nach Anspruch 9,
bei dem nur eine von mehreren Referenzoberflächen (7a, 7b) als ein Referenzpunkt verwendet wird, der durch das Vertikalpositionserfassungsmittel (12) erfaßt wird.

11. Drehkopf nach Anspruch 1,
bei dem das Vertikalpositionserfassungsmittel (12) ein Vertikalpositionserfassungselement (8) enthält, welches gegenüber der oberen Oberfläche des sich drehenden Zylinders (2) vorgesehen ist, und bei dem ein Teil der oberen Oberfläche des sich drehenden Zylinders (2) als die Referenzoberfläche verwendet wird.

12. Drehkopf nach Anspruch 11,
weiterhin enthaltend eine Verdrahtungstafel (14), die in einer an dem oberen Abschnitt des sich drehenden Zylinders ausgebildeten Ausnehmungen aufgenommen ist.

13. Drehkopf nach Anspruch 1,
bei dem das Vertikalpositionserfassungsmittel (12) ein Vertikalpositionserfassungselement (8) aufweist, welches an dem stehenden Zylinder (3) angebracht ist, und bei dem ein Teil der Oberfläche des sich drehenden Zylinders (2), der dem stehenden Zylinder (2) gegenüberliegt, als die Referenzoberfläche verwendet wird.

## Revendications

1. Tête rotative pour utilisation dans un appareil d'enregistrement et de reproduction magnétique comprenant :
un cylindre fixe (3) ;
un cylindre rotatif (2) opposé audit cylindre fixe ;
deux éléments mobiles électriquement commandables (4a, 4b) montés sur ledit cylindre rotatif de façon à être séparés l'un de l'autre de 180° ;
au moins deux têtes magnétiques (5a, 5b) respectivement fixées auxdits deux éléments mobiles (4a, 4b) ; et
un moyen de commande (13) pour commander lesdits éléments mobiles (4a, 4b) ;
caractérisé par
au moins une surface de référence (7, 7a, 7b) prévue sur ledit cylindre rotatif (2) ; et
un moyen détecteur de position verticale (12, 8) séparé dudit cylindre rotatif (2) pour détection des positions verticales desdits éléments mobiles (4a, 4b) et une position verticale de ladite surface de référence (7, 7a, 7b) une fois pour chaque rotation dudit cylindre rotatif (2) ;
dans lequel ledit moyen de commande (13) commande lesdits éléments mobiles (4a, 4b) en réponse à une sortie dudit moyen détecteur de position (12) d'une manière telle que lesdites têtes magnétiques (5a, 5b) sont positionnées à une position verticale prédéterminée par rapport à la position verticale de ladite surface de référence (7, 7a, 7b).

2. Tête rotative selon la revendication 1, dans laquelle lesdites têtes magnétiques (5a, 5b) présentent des angles d'azimut différents.

3. Tête rotative selon la revendication 1, dans laquelle ledit moyen de commande (13) comprend un moyen de compensation et d'intégration (28, 29) lorsque les signaux sont enregistrés sur une bande magnétique (11).

4. Tête rotative selon la revendication 1, dans laquelle ledit moyen détecteur de position verticale (12) comprend un seul élément détecteur de position verticale (8) et un seul processeur de signaux (21).

5. Tête rotative selon la revendication 4, dans laquelle ledit élément détecteur de position verticale (8) est positionné sur un côté opposé au côté sur lequel une bande magnétique (11) est amenée en contact avec lesdits cylindres fixe et rotatif (3, 2).

6. Tête rotative selon la revendication 5, dans laquelle ledit élément détecteur de position verticale (8) est disposé proche d'un emplacement où la bande magnétique (11) quitte lesdits cylindres (2, 3).

7. Tête rotative selon la revendication 1, dans laquelle ladite surface de référence (7, 7a, 7b) est prévue en amont d'une ligne centrale entre lesdits éléments mobiles (4a, 4b) dans le sens de rotation dudit cylindre rotatif (2).

8. Tête rotative selon la revendication 1, dans laquelle ladite surface de référence (7, 7a, 7b) est intégralement formée avec ledit cylindre rotatif (2).

9. Tête rotative selon la revendication 1, dans laquelle ledit cylindre rotatif (2) présente une pluralité de surfaces de référence (7, 7a, 7b).

10. Tête rotative selon la revendication 9, dans laquelle seulement une surface parmi la pluralité des surfaces de référence (7a, 7b) est utilisée comme un point de référence détecté par ledit moyen détecteur de position verticale (12).

11. Tête rotative selon la revendication 1, dans laquelle ledit moyen détecteur de position verticale (12) comprend un élément détecteur de position verticale (8) opposé à la surface supérieure dudit cylindre rotatif (2) et dans lequel une partie de la surface supérieure dudit cylindre rotatif (2) est utilisée comme ladite surface de référence.

12. Tête rotative selon la revendication 11, comprenant de plus une carte de câblage (14) reçue dans un évidement formé à une partie supérieure dudit cylindre rotatif.

13. Tête rotative selon la revendication 1, dans laquelle ledit moyen détecteur de position verticale (12) comprend un élément détecteur de position verticale (8) monté sur ledit cylindre fixe (3) et dans lequel une partie de cette surface dudit cylindre rotatif (2) qui est opposé audit cylindre fixe (2) est utilisée comme ladite surface de référence.
